# EUROPÄISCHE PATENTANMELDUNG

(11) **EP 3 144 556 A1**
(43) Veröffentlichungstag der Anmeldung: **22.03.2017**
(21) Anmeldenummer: 16001685.3
(22) Anmeldetag: 29.07.2016
(51) Int. Cl.: F16D 65/092

(54) **BREMSBELAGVORRICHTUNG FÜR EINE SCHEIBENBREMSE**

(30) Priorität: 12.09.2015 DE 102015011973
(71) Anmelder: MAN Truck & Bus AG, 80995 München (DE)
(72) Erfinder: Orgler, Florian, 80335 München (DE)
(74) Vertreter: v. Bezold & Partner Patentanwälte - PartG mbB

(57) **Zusammenfassung**

Die Erfindung betrifft eine Bremsbelagvorrichtung für eine Scheibenbremse, umfassend einen Bremsbelaghalter (2) und einen auf einer Aufbringfläche (3) des Bremsbelaghalters (2) aufgebrachten Bremsbelag (4). Der Bremsbelag zeichnet sich dadurch aus, dass eine durch die Belagoberseite des Bremsbelags 4 ausgebildete Reibfläche (5) höchstens 75 % der Größe der Aufbringfläche (3) des Bremsbelaghalters beträgt. Dies erhöht die Flächenpressung des Bremsbelags, so dass dieser auch bei sehr niedrigen Betätigungskräften eine Belastung erfährt, um so insbesondere bei Fahrzeugen mit Hybridantrieb einen dauerhaften frühzeitigen Verlust des Reibwerts der Bremsbeläge zu verhindern.

## Beschreibung

Die vorliegende Erfindung betrifft eine Bremsbelagvorrichtung für eine Scheibenbremse.

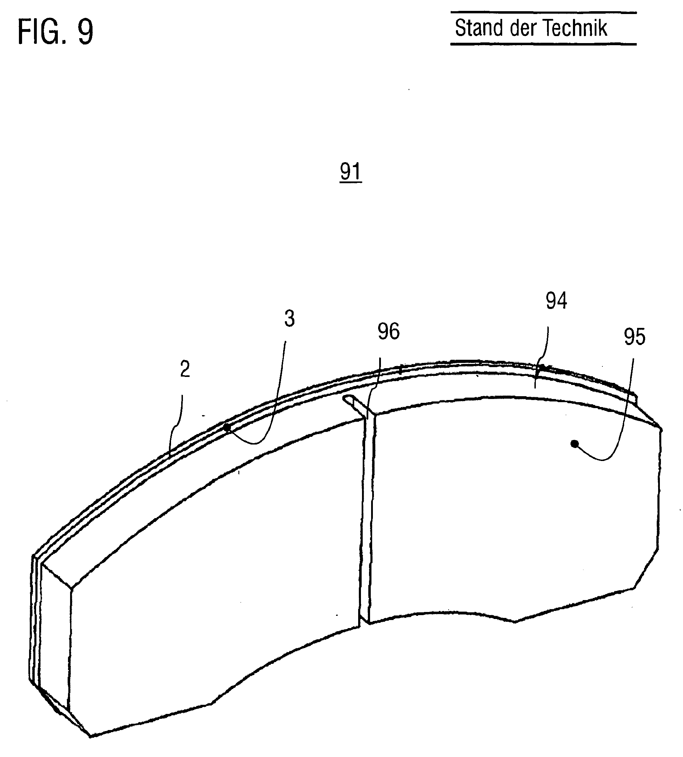

Figur 9 zeigt beispielhaft eine aus dem Stand der Technik bekannte typische Bremsbelagvorrichtung 91. Die Bremsbelagvorrichtung 91 umfasst einen Bremsbelaghalter 2 in Form einer Belagträgerplatte und einen auf einer Aufbringfläche 3 des Bremsbelaghalters 2 aufgebrachten Bremsbelag 94, der an seiner Oberseite eine Reibfläche 95 ausbildet. Der Bremsbelag 94 besteht aus einem Bremsbelagmaterial, das zum tribologischen Zusammenwirken mit einem entsprechenden Reibelement, hier einer Bremsscheibe, geeignet ist. Zur Aufnahme von im Bremsbetrieb an der Reibfläche 95 entstehenden Abriebpartikeln kann in den Bremsbelag eine dünne Nut 96 eingebracht sein.

Aus der Praxis, insbesondere bei Stadtbussen mit Hybridantrieb, sind Fälle bekannt, bei denen die Bremsbeläge aufgrund geringer Beanspruchung und Abnutzung dauerhaft und nicht wiederkehrend den Reibwert verloren haben. Dieses Phänomen wird auch als "Einschlafen" der Bremsbeläge bezeichnet. Dieser Effekt wird dadurch erzeugt, dass der größte Anteil der Bremsleistung dieser Fahrzeuge durch eine Dauerbremseinrichtung wie einem Retarder oder durch Rekuperationsvorgänge und nicht durch die Betriebsbremsvorrichtung aufgebracht wird. Ein derartiges "Einschlafen" und der damit verbundene Reibwertabfall der Bremsbeläge stellt ein Sicherheitsrisiko dar und erhöht die Betriebskosten für das Fahrzeug, da die Bremsbeläge frühzeitig ausgetauscht werden müssen, obwohl diese kaum abgenutzt sind.

Es ist somit eine Aufgabe der Erfindung, eine verbesserte Bremsbelagvorrichtung für eine Scheibenbremse bereitzustellen, mit der Nachteile herkömmlicher Bremsbelagvorrichtungen vermieden werden können. Die Aufgabe der Erfindung ist es insbesondere, eine Bremsbelagvorrichtung bereitzustellen, die für den Einsatz bei Fahrzeugen mit Hybridantrieb, insbesondere bei Nutzfahrzeugen mit Hybridantrieb, geeignet ist und keinen frühzeitigen und dauerhaften Verlust des Reibwerts aufweist.

Diese Aufgaben werden durch Vorrichtungen mit den Merkmalen des unabhängigen Anspruchs gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß allgemeinen Gesichtspunkten der Erfindung wird eine Bremsbelagvorrichtung für eine Scheibenbremse bereitgestellt, die in an sich bekannter Weise einen Bremsbelaghalter und einen auf einer Aufbringfläche des Bremsbelaghalters aufgebrachten Bremsbelag umfasst. Der Bremsbelaghalter ist üblicherweise als Trägerplatte ausgeführt und wird auch als Belagträgerplatte oder Belagrückenplatte bezeichnet und kann ferner sog. Underlayerzwischenschichten aufweisen. Die Belagoberseite des Bremsbelags dient als Reibfläche zum tribologischen Zusammenwirken mit einem Reibelement, z. B. einer Bremsscheibe. Die Bremsbelagvorrichtung ist beispielsweise bei einer Scheibenbremse typischerweise in einen Belagschacht eingesetzt. Über eine Zuspanneinheit, die auf der dem Bremsbelag abgewandten Seite des Bremsbelaghalters angeordnet ist, kann die Bremsbelagvorrichtung gegen eine Bremsscheibe gedrückt werden, um mit dieser tribologisch zusammenzuwirken. Die Aufbringfläche ist somit diejenige Oberflächenseite des Bremsbelaghalters, die in montiertem Zustand des Bremsbelaghalters der Bremsscheibe zugewandt ist.

Eine erfindungsgemäße Bremsbelagvorrichtung zeichnet sich dadurch aus, dass die durch die Belagoberseite des Bremsbelags ausgebildete Reibfläche höchstens 75 % der Größe der möglichen Aufbringfläche des Bremsbelaghalters beträgt, so dass bei Draufsicht auf die Bremsbelagvorrichtung mit Sicht auf die Reibfläche die Reibfläche höchstens 75 % der Aufbringfläche überdeckt. Mit anderen Worte ist die Fläche der Oberseite des Bremsbelags maximal 75 % so groß wie die Aufbringfläche des Bremsbelaghalters. Gemäß einer bevorzugten Ausführungsform kann die Reibfläche höchstens 60 % der Größe der Aufbringfläche des Bremsbelags betragen. Gemäß einer weiteren Variante kann die Reibfläche höchstens 50 % der Größe der Aufbringfläche des Bremsbelaghalters betragen.

Diese bewusste Verkleinerung der durch den Bremsbelag bzw. das Bremsbelagmaterial ausgebildeten Reibfläche erhöht die im Bremsbetrieb auftretende Flächenpressung auf das Belagmaterial deutlich. Dadurch kann trotz des reduzierten Bremseinsatzes bei einem Hybridantrieb ein "Einschlafen" der Bremsbeläge zuverlässig verhindert werden. Gleichzeitig bietet die Erfindung den weiteren Vorzug, dass die herkömmlichen Anschlussmaße und bestehenden konstruktiven Ausgestaltungen, insbesondere für den Bremssattel, Bremsträger und Bremsscheibe und auch bestehende Bremsbelaghalter weiter verwendet und so aufwändige konstruktive Mehraufwände vermieden werden können.

Durch die reduzierte Größe der Reibfläche und die daraus resultierende Erhöhung der Flächenpressung erfährt somit der Bremsbelag auch bei sehr niedrigen Betätigungskräften, wie sie bei einem Hybridfahrzeug eher üblich sind, eine Belastung, die in einem ähnlichen Größenverhältnis liegt, wie sie der Bremsbelag in vergleichbaren Anwendungen ohne Dauerbremseinrichtungen oder Rekuperationsbremsvorgänge hätte. Der Bremsbelag kann in an sich bekannter Weise auf dem Bremsbelaghalter befestigt werden, z. B. durch Kleben oder Sintern.

Die Bremsbelagvorrichtung kann somit eine oder mehrere Aussparungen, insbesondere großflächige Aussparungen, aufweisen, die auf der Aufbringfläche des Bremsbelaghalters bremsbelagfreie Stellen darstellen oder zumindest Bereiche darstellen, in denen der aufgebrachte Bremsbelag eine geringere Tiefe als an anderen Stellen aufweist und dadurch keine Reibfläche ausbildet.

Durch die Anzahl, Form, Fläche und/oder Lage derartiger Aussparungen kann das Verschleißverhalten des Belages optimiert und das Verschleißvolumen auf die jeweilige Anwendung angepasst werden.

Beispielsweise kann der Bremsbelag Ausnehmungen aufweisen, die sich von der Reibfläche bis zur Aufbringfläche erstrecken, so dass die Tiefe der Aussparung bis zur Belagrückenplatte reicht. Die Tiefe der Aussparung kann jedoch auch variabel festgelegt werden.

Beispielsweise kann der Bremsbelag Ausnehmungen aufweisen, die sich von der Reibfläche in Richtung der Aufbringfläche, jedoch nicht bis zur Aufbringfläche erstrecken. Gemäß dieser Ausführungsvariante überdeckt eine an der Belagunterseite des Bremsbelags ausgebildete Befestigungsfläche des Bremsbelags, die an der Aufbringfläche befestigt ist, mehr als 75 % der Aufbringfläche, weiter vorzugsweise mehr als 90 % der Aufbringfläche. Diese Ausführungsvariante bietet den Vorzug, dass sie dem Bremsbelagmaterial mehr Halt auf dem Bremsbelaghalter bietet und somit das Risiko reduziert, dass der Belag abgeschert wird.

Eine weitere Möglichkeit, den Halt des Belagmaterials auf dem Bremsbelaghalter zu verbessern, ist, wenn die Reibfläche Ausnehmungen aufweist, die einen sich in Richtung der Aufbringfläche verjüngenden Querschnitt aufweisen. Es wird jedoch betont, dass es auch möglich ist, dass die Ausnehmungen einen sich nicht verjüngenden Querschnitt aufweisen, beispielsweise, indem die Ausnehmungen nutförmig oder zylinderförmig ausgebildet sind.

Gemäß einer weiteren Ausführungsform kann die Reibfläche streifenförmige Ausnehmungen und/oder Vertiefungen aufweisen. Die streifenförmigen Ausnehmungen und/oder Vertiefungen können als parallele Ausnehmungen in Längsrichtung oder in Querrichtung der Aufbringfläche ausgeführt sein. Die Anzahl der streifenförmigen Ausnehmungen kann mindestens drei sein.

Eine Variante sieht hierbei vor, dass sich die streifenförmigen Ausnehmungen von einem Randbereich der Aufbringfläche zu einem gegenüberliegenden Randbereich der Aufbringfläche erstrecken. Eine andere Variante sieht vor, dass die streifenförmigen Ausnehmungen umfangsseitig von dem Bremsbelag umgeben sind, d. h., die Länge einer streifenförmigen Ausnehmung ist kleiner als die Entfernung zweier gegenüberliegender Randbereiche.

Eine weitere Möglichkeit der erfindungsgemäßen Realisierung sieht vor, dass die Reibfläche zwei Ausnehmungen aufweist, die jeweils vom Bremsbelag umgeben sind. Die Ausnehmungen können dabei zylinderförmig ausgeführt sein oder einen eckigen Querschnitt aufweisen, der beispielsweise an die Außenkontur des Bremsbelaghalters angepasst sein kann. Die Reibfläche kann jedoch auch eine Vielzahl von Ausnehmungen, beispielsweise mindestens zehn Ausnehmungen aufweisen, die beispielsweise zylinderförmig und/oder als konische Ausnehmungen ausgeführt sind und die jeweils vom Bremsbelag umgeben sind. Diese Ausführungsvariante bietet den Vorzug, dass die Abstände zwischen den unterschiedlichen Kontaktbereichen der ausgebildeten Reibfläche nicht zu groß werden.

Gemäß einer weiteren Ausführungsform ist der Bremsbelag an zwei voneinander getrennten Stehen flächig auf die Aufbringfläche aufgebracht. Gemäß einer Variante dieser Ausführungsform kann der Bremsbelag beispielsweise auf zwei zueinander disjunkten Kreisflächen der Aufbringfläche und zylinderförmig aufgebracht sein. Außerhalb dieser Stellen, auf denen der Reibbelag aufgebracht ist, wird somit eine Freifläche gebildet, an der kein Bremsbelag auf der Aufbringfläche vorgesehen ist und die mindestens 25 % der Aufbringfläche ausmacht.

Gemäß einem weiteren Aspekt der Erfindung wird ein Hybridfahrzeug, insbesondere ein Nutzfahrzeug mit einem Hybridantrieb, bereitgestellt, umfassend eine Bremsbelagvorrichtung wie in diesem Dokument beschrieben. Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figuren 1 bis 7: jeweils eine Draufsicht auf eine Bremsbelagvorrichtung gemäß unterschiedlichen Ausführungsbeispielen der Erfindung;
- Figur 8: eine Querschnittsansicht auf eine Bremsbelagvorrichtung gemäß einem Ausführungsbeispiel der Erfindung; und
- Figur 9: eine perspektivische Ansicht einer aus dem Stand der Technik bekannten Bremsbelagvorrichtung.

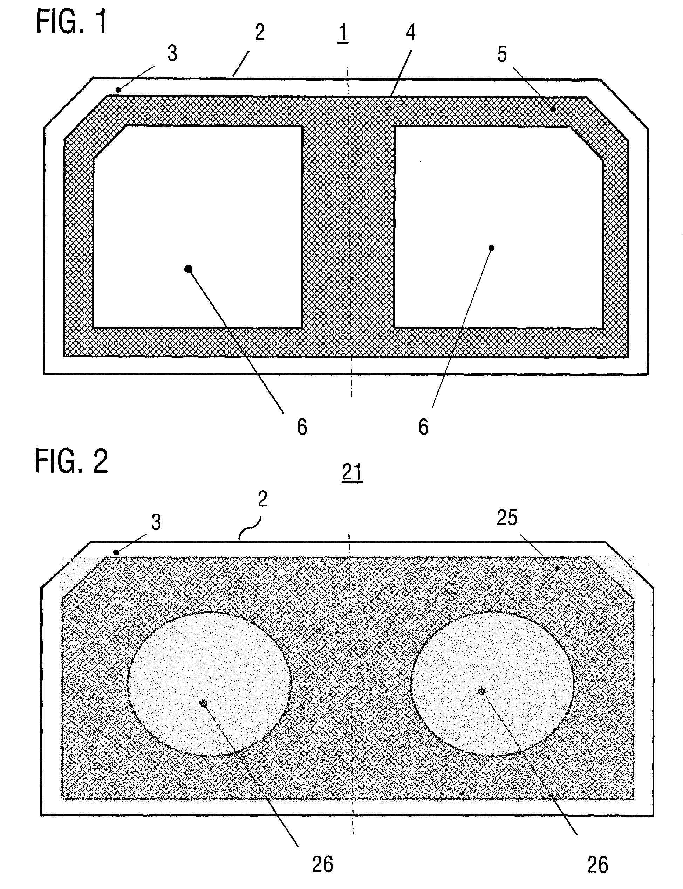

Figur 1 zeigt eine Draufsicht auf eine Bremsbelagvorrichtung 1 mit Sicht auf die Reibfläche 5, umfassend einen Bremsbelaghalter in Form einer Bremsbelagrückenplatte 2 und einen Bremsbelag 4, der auf einer Aufbringfläche 3 der Bremsbelagrückenplatte 2 in an sich bekannter Weise befestigt ist. Der Bremsbelag bzw. die Reibfläche ist in allen Figuren mit der schraffierten Fläche gekennzeichnet.

Wie in Figur 1 erkennbar ist, beträgt die Größe der Reibfläche 5 deutlicher weniger als 75 % der Größe der Aufbringfläche der Bremsbelagrückenplatte 2. Die Größe der Aufbringfläche entspricht der von der äußeren schwarzen Linie 2 umrandeten Fläche. Die Größe der Reibfläche entspricht der Größe der schraffierten Fläche.

Der Bremsbelag 4 weist hierzu zwei großflächige Ausnehmungen 6 auf, die von Bremsbelagmaterial umgeben sind. Das Bremsbelagmaterial erstreckt sich entlang eines äußeren Randbereichs der Aufbringfläche sowie längs eines breiten Querstreifens im mittleren Bereich. Die Ausnehmungen haben im Querschnitt die Form eines Rechtecks, bei dem eine Ecke abgekantet ist, so dass sich ein Fünfeck ausbildet. Die Kontur der Ausnehmung ist an die Kontur des äußeren Randbereichs angepasst, der ebenfalls eine korrespondierende Abkantung einer äußeren Ecke aufweist. Die Ecken der Kontur können auch durch Radien abgerundet sein.

Es wird betont, dass die Darstellung in Figur 1 und den nachfolgenden Figuren nur schematisch ist und dass die tatsächliche Grundform der Bremsbelagrückenplatte 2 in der Praxis für Bremsscheiben üblicherweise leicht gekrümmt ist, wie dies in Figur 9 dargestellt ist. Diese gekrümmte Form ist hier zur Vereinfachung der Darstellung in den Figuren 1 bis 8 weggelassen.

In den nachfolgenden Figuren sind alternative Ausführungsvarianten beispielhaft dargestellt, die deutlich machen, dass eine Vielzahl von Ausführungsvarianten möglich sind, um großflächige Ausnehmungen zu realisieren, so dass die durch die Belagoberseite des Bremsbelags 4 ausgebildete Reibfläche 5 höchstens 75 % der Größe der Aufbringfläche 3 der Bremsbelagrückenplatte 2 beträgt. In diesen Figuren ist die Belagrückenplatte jeweils mit dem Bezugszeichen 2 und der Aufbringfläche jeweils wiederum mit dem Bezugszeichen 3 gekennzeichnet.

Die Besonderheit der Ausführungsvariante einer Bremsbelagvorrichtung 21, die in Figur 2 gezeigt ist, liegt darin, dass in den Bremsbelag zwei großflächige zylinderförmige Ausnehmungen 26 eingebracht sind, die in einer Draufsicht auf die Reibfläche 25 als kreisförmige Ausnehmungen 26 erscheinen.

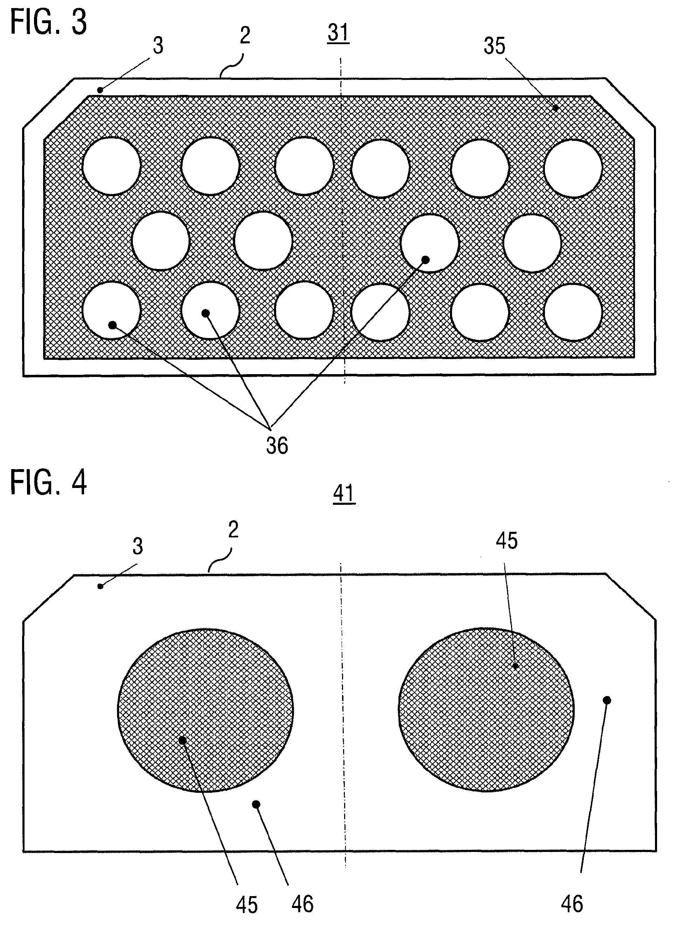

Figur 3 zeigt eine weitere Variante einer Bremsbelagvorrichtung 31, bei der anstatt zweier großflächiger Ausnehmungen 26 16 kleinere zylinderförmige Ausnehmungen 36 in den Bremsbelag 35 eingebracht sind, die in der Draufsicht auf die Reibfläche 35 als kreisförmige Ausnehmungen erscheinen. Die Anzahl der Ausnehmungen kann von den hier abgebildeten 16 Ausnehmungen abweichen und eine geringere oder größere Anzahl aufweisen.

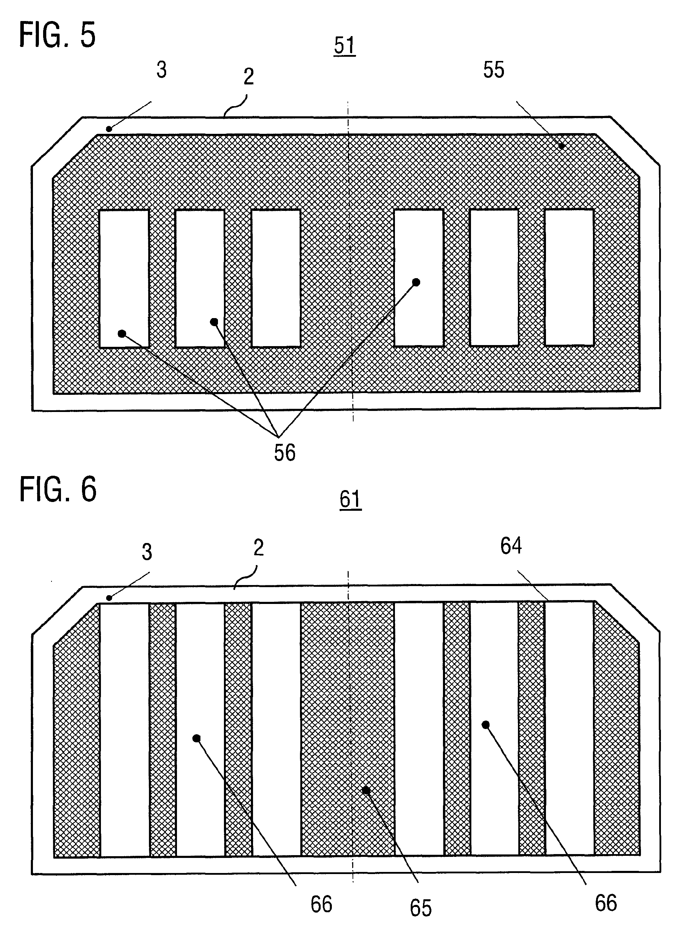

Bei der Ausführungsvariante der Bremsbelagvorrichtung 41 gemäß Figur 4 ist stattdessen links und rechts von der Mitte der Aufbringfläche 3 in einem mittleren Bereich jeweils ein zylinderförmiges Belagmaterial 45 aufgebracht, das von einer großflächigen Freifläche 46 umgeben ist, d. h., die Freifläche 46 entspricht einem Bereich der Aufbringfläche 3, an dem kein Bremsbelagmaterial aufgetragen ist. Bei den Ausführungsvarianten 51, 61 und 71 der Figuren 5 bis 7 sind die Ausnehmungen als streifenförmige Ausnehmungen in das Belagmaterial eingebracht.

Bei der Variante der Figur 5 weist die Reibfläche 55 sechs streifenförmige Ausnehmungen 56 quer zur Längsrichtung der Bremsbelagrückenplatte 2 auf, die sich circa über die Hälfte der Breite der Belagoberfläche 3 erstrecken. Die durch den aufgebrachten Bremsbelag ausgebildete Reibfläche 55 überdeckt höchsten 75 % der Aufbringfläche 3 der Bremsbelagrückenplatte 2. Die Anzahl der Ausnehmungen kann von den hier abgebildeten sechs Ausnehmungen in Anzahl und Lage abweichen.

Gemäß der in Figur 6 gezeigten Ausführungsvariante 61 erstrecken sich die in der Reibfläche 65 vorhandenen Ausnehmungen 66 von einem Randbereich der Aufbringfläche zu einem gegenüberliegenden Randbereich der Aufbringfläche 3, wobei lediglich beispielhaft wiederum sechs streifenförmige Ausnehmungen 66 in der Reibfläche 65 des Bremsbelags 64 eingebracht sind.

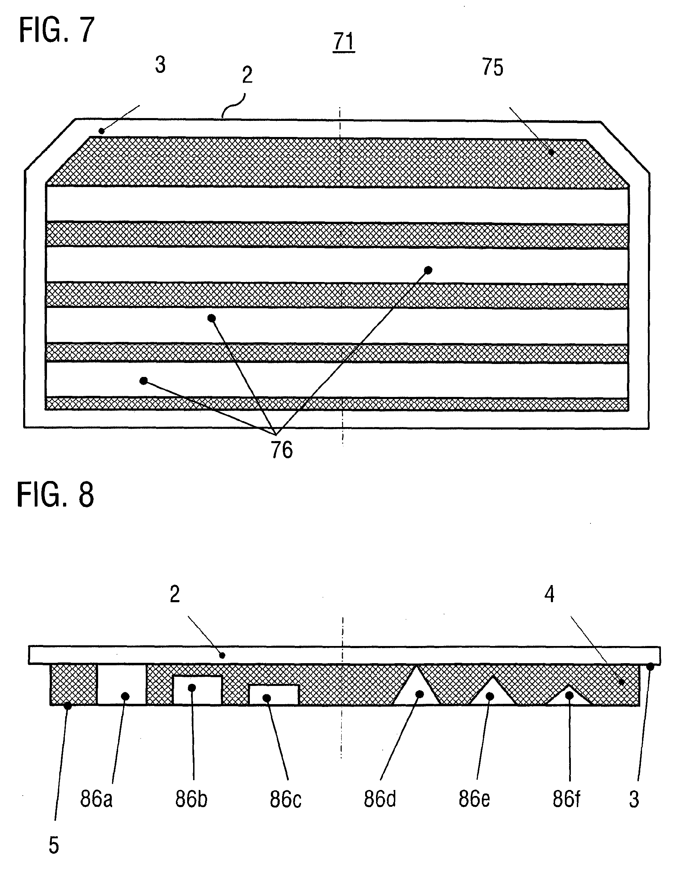

Bei der Ausführungsvariante 71, die in Figur 7 dargestellt ist, erstrecken sich die streifenförmigen Ausnehmungen 76 im Unterschied zur Figur 6 nicht in Querrichtung, sondern in Längsrichtung der Aufbringfläche 3, wobei in dem gezeigten Beispiel nur vier streifenförmige Ausnehmungen 76 in die Reibfläche eingebracht sind. Die durch die Belagoberseite des Bremsbelags ausgebildete Reibfläche 75 überdeckt höchstens 75 % der Aufbringfläche 3 der Bremsbelagrückenplatte 2. Die Anzahl der Ausnehmungen kann von den hier abgebildeten vier Ausnehmungen in Anzahl und Lage abweichen.

Figur 8 zeigt eine Querschnittsansicht zur Illustration unterschiedlicher Varianten von Ausnehmungen. Ausnehmungen können entweder einen über ihre Tiefe im Wesentlichen konstanten Querschnitt aufweisen und folglich nicht verjüngend in Richtung der Aufbringfläche 3 ausgeführt sein, was beispielhaft anhand der Ausnehmungen 86a, 86b und 86c gezeigt ist. Es besteht jedoch auch die Möglichkeit, dass die Ausnehmungen sich ausgehend von der Reibfläche 5 in Richtung der Belagrückenplatte 2 verjüngen, was beispielsweise durch die Ausnehmungen 86d bis 86f illustriert ist. Dabei besteht jeweils die Möglichkeit, dass die Ausnehmungen so ausgestaltet sind, dass sie sich von der Reibfläche 5 bis zur Aufbringfläche 3 erstrecken, so dass die Aufbringfläche 3 in einer Draufsicht mit Sicht auf die Reibfläche 5 sichtbar ist. Alternativ können die Ausnehmungen auch so ausgeführt sein, dass sie sich nicht bis zur Reibfläche 3 erstrecken, d.h. dass die Tiefe der Ausnehmungen kleiner ist als die Dicke des Bremsbelagmaterials 4, was beispielsweise anhand der Ausnehmungen 86b, 86c, 86e und 86f dargestellt ist. Die eckig bzw. winklig dargestellten Ausläufe der Aussparungen können auch mit einem Radius versehen sein.

Die Abmaße der Belagrückenplatte 2, des Bremsbelaghalters und der Aufbringfläche 3 in den Figuren 1 bis 8 entsprechen den typischen Anschlussmaßen bekannter Bremssattel, Bremsträger und Bremsscheiben, die je nach Reifengröße unterschiedlich sind. Es wird nochmals betont, dass die erfindungsgemäßen Bremsbelagvorrichtungen für den Einsatz mit Hybridfahrzeugen vorgesehen sind, bei denen der größte Anteil der Bremsleistung durch den Rekuperationsvorgang aufgenommen wird, jedoch nicht hierauf beschränkt ist. Auch bei anderen Anwendungen (nicht zwingend Hybridfahrzeuge) mit starken Dauerbremseinrichtungen wie z. B. einem Retarder, können ähnliche negative Belageffekte auftreten, bei denen Maßnahmen gemäß dieser Erfindung nötig werden. Bei Einsatz der Bremsbelagvorrichtung in derartigen Fahrzeugen kann die Größe der Reibfläche im Vergleich zum Stand der Technik in Bezug auf die Größe des Bremsbelaghalters bzw. dessen Aufbringfläche stark verkleinert werden und dennoch eine ausreichende Bremsleistung und eine lange Belagstandzeit bereitgestellt werden. Zusätzlich wird die Flächenpressung des Bremsbelags im Betrieb erhöht und dadurch das Problem des frühzeitigen "Einschlafens" (Reibwertreduktion) der Bremsbeläge verhindert.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1, 21, 31, 41, 51, 61, 71: Bremsbelagvorrichtung
- 2: Bremsbelaghalter
- 3: Aufbringfläche
- 4,64: Bremsbelag
- 5, 25, 35, 45, 55, 65, 75: Reibfläche
- 6, 26, 36, 46, 56, 66, 76: Ausnehmungen
- 86a-86f: Ausnehmungen
- 91: Bremsbelagvorrichtung
- 94: Bremsbelag
- 95: Reibfläche
- 96: Nut

## Patentansprüche

1. Bremsbelagvorrichtung (1; 21; 31; 41; 51; 61; 71) für eine Scheibenbremse, umfassend
einen Bremsbelaghalter (2); und
einen auf einer Aufbringfläche (3) des Bremsbelaghalters (2) aufgebrachten Bremsbelag,
**dadurch gekennzeichnet,**
**dass** eine durch die Belagoberseite des Bremsbelags (4) ausgebildete Reibfläche (5; 25; 35; 45; 55; 65; 75) höchstens 75 % der Größe der Aufbringfläche (3) des Bremsbelaghalters (2) beträgt.

2. Bremsbelagvorrichtung nach Anspruch 1, **dadurch gekennzeichnet,**
(a) **dass** die durch die Belagoberseite des Bremsbelags ausgebildete Reibfläche höchstens 60 % der Größe der Aufbringfläche (3) des Bremsbelaghalters (2) beträgt; oder
(b) **dass** die durch die Belagoberseite des Bremsbelags ausgebildete Reibfläche höchstens 50 % der Größe der Aufbringfläche (3) des Bremsbelaghalters (2) beträgt.

3. Bremsbelagvorrichtung nach Anspruch 1 oder 2, **dadurch gekennzeichnet, dass** der Bremsbelag Ausnehmungen (6; 26; 36; 56; 66; 86a; 86d) aufweist, die sich von der Reibfläche (5) bis zur Aufbringfläche (3) erstrecken.

4. Bremsbelagvorrichtung nach einem der vorhergehenden Ansprüche, **dadurch gekennzeichnet,**
(a) **dass** eine an der Belagunterseite des Bremsbelags ausgebildete Befestigungsfläche (6) des Bremsbelags, die an der Aufbringfläche (3) befestigt ist, mehr als 75 % der Aufbringfläche, weiter vorzugsweise mehr als 90 % der Aufbringfläche, überdeckt; und
(b) **dass** der Bremsbelag Ausnehmungen (86b; 86c; 86e; 86f) aufweist, die sich von der Reibfläche (5) in Richtung der Aufbringfläche (3), jedoch nicht bis zur Aufbringfläche (3) erstrecken.

5. Bremsbelagvorrichtung nach einem der vorhergehenden Ansprüche, **dadurch gekennzeichnet, dass** die Reibfläche Ausnehmungen (86d; 86e; 86f) aufweist, die einen sich in Richtung der Aufbringfläche (3) verjüngenden Querschnitt aufweisen.

6. Bremsbelagvorrichtung nach einem der vorhergehenden Ansprüche, **dadurch gekennzeichnet, dass** die Reibfläche streifenförmige Ausnehmungen (56; 66; 76) aufweist.

7. Bremsbelagvorrichtung nach Anspruch 6, **dadurch gekennzeichnet**,
(a) dass die streifenförmigen Ausnehmungen (56; 66; 76) als parallele Ausnehmungen in Längsrichtung oder in Querrichtung ausgeführt sind; und/oder
(b) dass die Anzahl der streifenförmigen Ausnehmungen (56; 66; 76) mindestens 3 ist; und/oder
(c1) dass sich die streifenförmigen Ausnehmungen (66; 76) von einem Randbereich der Aufbringfläche zu einem gegenüberliegenden Randbereich der Aufbringfläche erstrecken; oder
(c2) dass die streifenförmigen Ausnehmungen (56) umfangseitig von dem Bremsbelag umgeben sind.

8. Bremsbelagvorrichtung nach einem der vorhergehenden Ansprüche, **dadurch gekennzeichnet,**
(a) **dass** die Reibfläche zwei Ausnehmungen (6; 26) aufweist, die jeweils von Bremsbelag umgeben sind; oder
(b) **dass** die Reibfläche mindestens zehn Ausnehmungen (36), vorzugsweise zylinderförmige und/oder konische Ausnehmungen, aufweist, die jeweils von Bremsbelag umgeben sind; und/oder
(c) **dass** der Bremsbelag (45) an zwei voneinander getrennten Stellen flächig auf die Aufbringfläche aufgebracht ist.

9. Hybridfahrzeug, insbesondere Nutzfahrzeug mit einem Hybridantrieb, mit einer Bremsbelagvorrichtung (1; 21; 31; 41; 51; 61; 71) nach einem der vorhergehenden Ansprüche.
